Europäisches Patentamt

European Patent Office

Office européen des brevets

(11) Veröffentlichungsnummer: **0 512 356 A2**

## EUROPÄISCHE PATENTANMELDUNG

(21) Anmeldenummer: **92107177.5**

(22) Anmeldetag: **28.04.92**

(51) Int. Cl.⁵: **G01B 11/00**

(30) Priorität: **02.05.91 DE 4114244**

(43) Veröffentlichungstag der Anmeldung:
**11.11.92 Patentblatt 92/46**

(84) Benannte Vertragsstaaten:
**CH DE FR GB IT LI**

(71) Anmelder: **Mauser-Werke Oberndorf GmbH**
**Teckstrasse 11**
**W-7238 Oberndorf(DE)**

(72) Erfinder: **Ross, Günther**
**Am Kirschberg 4**
**W-3341 Klein Denkte/Wolfenbüttel(DE)**

(74) Vertreter: **Hofmann, Gerhard, Dipl.-Ing.**
**Patentassessor et al**
**Stephanstrasse 49**
**W-8500 Nürnberg 30(DE)**

(54) **Messeinrichtung.**

(57) Bei einer Meßeinrichtung ist auf einem Meßtisch-(1) ein Ständer(2) in X-Y-Richtung verstellbar. Der Ständer(2) trägt einen Reflektor(18) und einen in Z-Richtung verstellbaren Meßtaster(10). Eine Laserlichtquelle(14) richtet einen Lichtstrahl auf den Reflektor(18). Eine aufwendige Nachführregelung für die Laserlichtquelle(14) ist durch einen rotierenden Drehspiegel(15) vermieden. Sein Lichtstrahl überstreicht die X-Y-Ebene und trifft in einer bestimmten Winkelstellung(W) auf den Reflektor(18). Die Auswerteschaltung(22) erfaßt die jeweilige Winkelstellung(W). Zusätzlich wird zur Bestimmung der X-Y-Position des Ständers(2) der Abstand zwischen dem Reflektor(18) und dem Drehspiegel(15) gemessen.

EP 0 512 356 A2

Die Erfindung betrifft eine Meßeinrichtung mit einem Ständer, der auf einem Meßtisch in X-Y-Richtung verstellbar ist und der einen Reflektor und einen in Z-Richtung höhenverstellbaren Meßtaster trägt, mit einer Laserlichtquelle, deren Lichtstrahl auf den Reflektor richtbar ist, mit einem Empfänger, der den vom Reflektor reflektierten Lichtstrahl erfaßt, und mit einer an die Laserlichtquelle und den Empfänger angeschlossenen Auswerteschaltung, die die jeweilige X-Y-Position des Ständers ermittelt.

Eine derartige Meßeinrichtung ist in der DE 39 14 849 A1 beschrieben. Der Ständer ist in den X-Y-Koordinaten frei bewegbar und um seine Längsachse drehbar. Eine solche Meßeinrichtung hat den Vorteil, daß sie als Höhenmeßgerät (Z-Richtung) zusätzlich auch X-Y-Positionen der jeweiligen Höhenmessung erfaßt, ohne eine aufwendige 3-Koordinatenmeßmaschine zu sein. Die Meßeinrichtung eignet sich für den Werkstattbereich.

Bei der DE 39 14 849 A1 wird die Bewegung des Ständers auf dem Meßtisch durch ein Laserinterferometer mit einer Nachführregeleinrichtung erfaßt. Das Laserinterferometer arbeitet mit einem teildurchlässigen Spiegel zusammen und ist an einer Aufnahmeeinrichtung montiert. Die Nachführregeleinrichtung führt dem Ständer die Aufnahmeeinrichtung oder die Laserlichtquelle und/oder den Spiegel nach.

Die Nachführregeleinrichtung nach der DE 39 14 849 A1 ist aufwendig. Dies ist ungünstig, da eine solche Meßeinrichtung im Vergleich zu 3-Koordinatenmeßmaschinen nur einfachen Meßaufgaben dienen soll.

Außerdem ist die Nachführregeleinrichtung auch langsam. Dies hat zur Folge, daß die Höhenmessung nach einer Umstellung des Ständers oder nach einer sonstigen Bewegung des Ständers nur verzögert erfolgen kann.

In der DE 39 08 760 A1 ist eine ähnliche Meßeinrichtung beschrieben. Bei dieser erfolgt die Auswertung der X-Y-Koordinaten durch mechanische Mittel. Der Ständer ist an in X-Y-Richtung verschieblichen Führungen befestigt.

Aufgabe der Erfindung ist es, eine Meßeinrichtung der eingangs genannten Art vorzuschlagen, bei der eine der Laserlichtquelle zugeordnete Nachführregeleinrichtung entfällt, die die Laserlichtquelle exakt jeder Bewegung des Ständers nachführen muß.

Erfindungsgemäß ist obige Aufgabe bei einer Meßeinrichtung der eingangs genannten Art dadurch gelöst, daß ein rotierender Drehspiegel den Lichtstrahl so auslenkt, daß er die X-Y-Ebene überstreicht und in einer Winkelstellung des Drehspiegels aus den Reflektor trifft und daß die Auswerteschaltung die jeweilige Winkelstellung des Drehspiegels erfaßt, in der der am Reflektor reflektierte Lichtstrahl auf den Empfänger trifft.

Dadurch erübrigt sich eine gesonderte Nachführung und Nachregelung der Laserlichtquelle gegenüber der jeweiligen Stellung des Ständers. Der regelungstechnische Aufwand der Meßeinrichtung vereinfacht sich somit wesentlich. Die Auswerteschaltung braucht nur Meßdaten bzw. Positionsdaten auszuwerten. Der Drehspiegel rotiert während eines Meßvorganges ständig. Die Drehzahl des Drehspiegels ist dabei so hoch, daß der Lichtstrahl bei einem manuellen Versetzen des Ständers oder bei anderen Bewegungen des Ständers oftmals auf dessen Reflektor trifft. Dadurch werden auch kleinste Verstellungen des Ständers in X-Y-Richtung gegenüber dem Meßtisch schnell erfaßt.

Bei der Meßeinrichtung ist vorzugsweise der Empfänger seitlich am Meßtisch an einer Halteeinrichtung in einem festen Abstand von der Laserlichtquelle angeordnet. Es findet dabei eine Dreiecksmessung statt, wobei der feste Abstand die eine Dreieckseite bildet und die beiden anderen Dreieckseiten von dem von dem Drehspiegel auf den Reflektor geleiteten und von diesem auf den Empfänger reflektierten Lichtstrahl gebildet sind. Aus der Dreiecksmessung läßt sich die jeweilige X-Y-Position des Ständers in der Auswerteschaltung errechnen.

Zusätzlich kann für die Dreiecksmessung von der Auswerteschaltung der Winkel in der X-Y-Ebene erfaßt werden, in dem der vom Reflektor reflektierte Lichtstrahl auf den Empfänger trifft. Zusätzlich oder statt dessen kann auch, wenn die Laserlichtquelle als Laserinterferometer aufgebaut ist, der Abstand zwischen dem Drehspiegel und dem Reflektor ausgewertet werden.

Es genügt für die Ermittlung der X-Y-Position auch nur den genannten Winkel und den jeweiligen Abstand zwischen dem Drehspiegel und dem Reflektor zu messen.

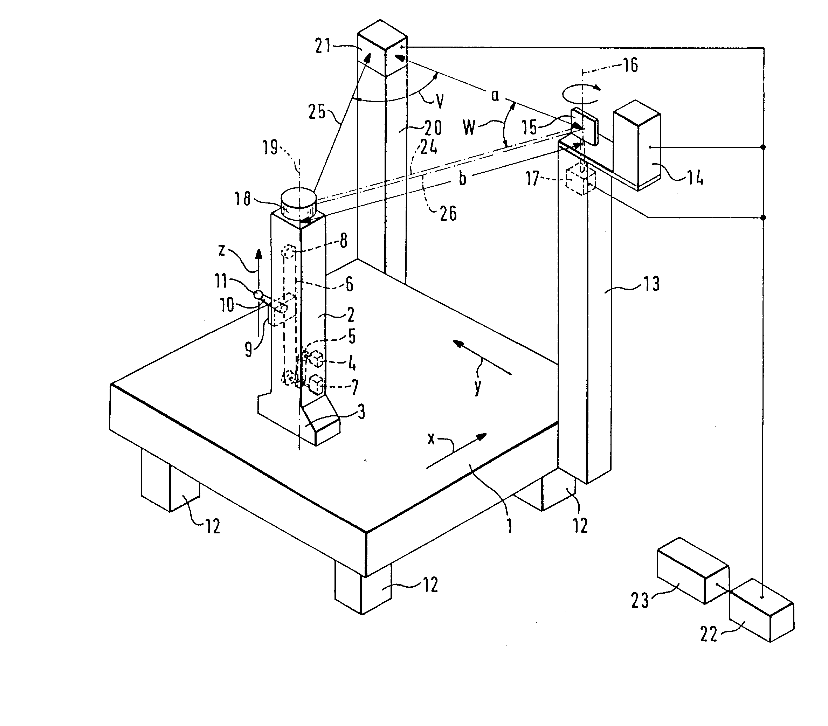

Weitere vorteilhafte Ausgestaltungen der Erfindung ergeben sich aus den Unteransprüchen und der folgenden Beschreibung eines Ausführungsbeispiels. Die Figur zeigt eine Meßeinrichtung mit einem Laser-Interferometer schematisch.

Auf einem Meßtisch(1) ist ein Ständer(2) aufgestellt, dessen Fuß(3) auf dem Meßtisch(1) in X-Y-Richtung verschieblich ist. Eine leichte Verschieblichkeit ist durch ein einstellbares Luftkissen erreicht, das zwischen der Unterseite des Fußes(3) und dem Meßtisch(1) wirksam ist. Das Luftkissen wird durch eine im Ständer(2) integrierte, batteriebetriebene Pumpe erzeugt.

Durch einen im Ständer(2) vorgesehenen Elektromotor(4) wird ein Antriebsrad(5) angetrieben, weiches ein Band oder ein Zugseil(6) über eine Magnetfeldkupplung(7) bewegt. Das Zugseil(6) ist um eine Umlenkrolle(8) geführt. Das Zugseil(6) ist mit einem Schlitten(9) fest verbunden, der einen Meßtaster(10) mit einem Antastkopf(11) trägt. Der Meßtaster(10) ist in Z-Richtung verstellbar, wobei er der Höhenmessung dient.

Der Meßtisch(1) ruht auf Füßen(12). An ihm ist eine Halteeinrichtung(13) angeordnet, die als Laserlichtquelle ein Laser-Interferometer(14) trägt. An der Halteeinrichtung(13) ist ein Drehspiegel(15) um die zur Z-Richtung parallele Achse(16) rotierbar gelagert. Der Drehspiegel(15) ist mittels eines Motors(17) angetrieben.

Oben am Ständer(2) ist ein Reflektor(18) befestigt, der als Ringreflektor ausgebildet ist. Seine Mittelachse(19) liegt parallel zur Achse(16). Auf der Mittelachse(19) liegt auch der Antastkopf(11). In der Figur ist zur Verdeutlichung der Antastkopf(11) außerhalb der Mittelachse(19) dargestellt. Den Antastkopf(11) in die Mittelachse(19) zu legen ist vorteilhaft, da der Ständer(2) nicht nur in der X- und Y-Richtung verschieblich, sondern auch um die Mittelachse(19) drehbar ist.

An dem Meßtisch(1) ist eine weitere Halteeinrichtung(20) angeordnet. Diese trägt als Empfänger eine Empfangsoptik(21). Der Drehspiegel(15), der Reflektor(18) und die Empfangsoptik(21) liegen in einer gemeinsamen, zur X-Y-Ebene parallelen Ebene.

Zwischen der Achse(16) des Drehspiegels(15) und der Empfangsoptik(21) besteht ein fester Abstand(a). Die Empfangsoptik(21), der Drehspiegel(15) und das Laser-Interferometer(14) sind an eine Auswerteschaltung(22) angeschlossen, der eine Anzeigeeinrichtung(23) nachgeschaltet ist.

Die Funktionsweise der beschriebenen Meßeinrichtung in X-Y-Richtung wird im folgenden beschrieben. Die Funktionsweise der Meßeinrichtung in Z-Richtung ist bekannt.

Der Lichtstrahl des Laser-Interferometers(14) ist auf den um die Achse(16) rotierenden Drehspiegel(15) gerichtet. Der vom Drehspiegel(15) ausgehende Lichtstrahl(24) überstreicht die X-Y-Ebene und "sucht" den Reflektor(18). In einer Winkelstellung(W) trifft der Lichtstrahl(24) (vgl. Figur) so auf den Ringreflektor(18), daß er als Lichtstrahl(25) auf die Empfangsoptik(21) trifft. Die Auswerteschaltung(22) nimmt dann diesen Winkel-(W) auf. Außerdem wird über den zum Drehspiegel(15) reflektierten Lichtstrahl(26) vom Laser-Interferometer(14) der Abstand(b) zwischen dem Reflektor(18) und dem Drehspiegel(15) erfaßt und an die Auswerteschaltung(22) gegeben. Die Auswerteschaltung(22) ermittelt aus den Dreiecksgrößen(a,W,b) die X-Y-Koordinaten der jeweiligen Stellung des Ständers(2) bzw. dessen Antastkopfes(11). Die jeweiligen X-Y-Koordinaten werden an der Anzeigeeinrichtung(23) dargestellt.

Im Rahmen der Erfindung liegen zahlreiche weitere Ausführungsbeispiele. Beispielsweise kann vorgesehen sein, daß die Empfangsoptik(21) den Winkel(V) erfaßt, in dem der reflektierte Lichtstrahl-(25) auftrifft. Es kann dann die Messung der Länge-(b) entfallen. Es ist auch möglich, die Empfangsoptik(21) mit dem Laser-Interferometer-(14) zu integrieren. Es wird dann der Winkel(W) ermittelt, in dem der Lichtstrahl(26) zurückfällt. Aus dem Winkel(W) und dem Abstand(b) läßt sich ebenfalls die jeweilige X-Y-Position des Ständers-(2) errechnen. Es ist davon ausgegangen, daß der Abstand(a) parallel zur Y-Richtung verläuft.

## Patentansprüche

1. Meßeinrichtung mit einem Ständer, der auf einem Meßtisch in X-Y-Richtung verstellbar ist und der einen Reflektor und einen in Z-Richtung höhenverstellbaren Meßtaster trägt, mit einer Laserlichtquelle, deren Lichtstrahl auf den Reflektor richtbar ist, mit einem Empfänger, der den vom Reflektor reflektierten Lichtstrahl erfaßt, und mit einer an die Laserlichtquelle und den Empfänger angeschlossenen Auswerteschaltung, die die jeweilige X-Y-Position des Ständers ermittelt,
dadurch gekennzeichnet,
daß ein rotierender Drehspiegel(15) den Lichtstrahl(24) so auslenkt, daß er die X-Y-Ebene überstreicht und in einer Winkelstellung(W) des Drehspiegels(15) auf den Reflektor(18) trifft, und daß die Auswerteschaltung(22) die jeweilige Winkelstellung(W) des Drehspiegels(15) erfaßt, in der der am Reflektor(18) reflektierte Lichtstrahl(25,26) auf den Empfänger(21) trifft.

2. Meßeinrichtung nach Anspruch 1,
dadurch gekennzeichnet,
daß der Empfänger(21) seitlich am Meßtisch(1) an einer Halteeinrichtung(20) in einem festen Abstand(a) von dem Drehspiegel(15) angeordnet ist.

3. Meßeinrichtung nach Anspruch 2,
dadurch gekennzeichnet,
daß der Abstand(a) parallel zur Y- oder X-Richtung liegt.

4. Meßeinrichtung nach einem der vorhergehenden Ansprüche,
dadurch gekennzeichnet,
daß die Laserlichtquelle als Laser-Interferometer(14) ausgebildet ist und die Auswerteschaltung(22) den Abstand(b) erfaßt, in dem bei der jeweiligen Winkelstellung(W) des Drehspiegels(15) der Reflektor(18) von dem Drehspiegel(15) steht.

5. Meßeinrichtung nach einem der vorhergehenden Ansprüche,
dadurch gekennzeichnet,
daß der Empfänger(21) und die Auswerteschaltung(22) so aufgebaut sind, daß der Winkel(V), in dem der reflektierte Lichtstrahl(25) auf den Empfänger(21) trifft, erfaßt wird.

6. Meßeinrichtung nach einem der vorhergehenden Ansprüche,
dadurch gekennzeichnet,
daß der Reflektor(18) ein Ringreflektor ist.